# EUROPEAN PATENT APPLICATION

(11) **EP 4 617 802 A1**
(43) Date of publication of application: **17.09.2025**
(21) Application number: 25159974.2
(22) Date of filing: 25.02.2025
(51) Int. Cl.: G05B 19/05, G06N 3/08

(54) **MODEL BASED SAFETY INSTRUMENTED SYSTEM PROGRAMMING USING ARTIFICIAL NEURAL NETWORKS**

(30) Priority: 11.03.2024 US 202418600996
(71) Applicant: Schneider Electric Systems USA, Inc., Foxborough, MA 02035 (US)
(72) Inventor: Mishra, Ajay, Irvine, CA 92620 (US); Banchik, Erna, Rancho Santa Margarita, CA 92688 (US); Ivanov, Diana, Mission Viejo, CA 92692 (US); Muthuramalingam, Murugananth, Foothill Ranch, CA 92610 (US)
(74) Representative: Friese Goeden Patentanwälte PartGmbB

(57) **Abstract**

A system for programming a safety programmable learning controller (PLC) of a safety-instrumented system includes a safety workstation wherein a safety control program is developed for execution by the safety PLC. The safety workstation comprises a memory configured to store programming instructions and a configurator processor. Upon execution of the programming instructions, the configurator processor receives a set of safety instructions defining one or more relationships between inputs and outputs of an industrial plant, populates an artificial neural network (ANN) based on the safety instructions, trains the ANN to determine weights and biasing nodes for the ANN such that the ANN is configured to replicate the relationships defined by the safety instructions, and provides a safety control program based on the configured ANN. The safety control program is downloaded to the safety PLC so that upon execution, the safety PLC mitigates and prevents safety hazards within the industrial plant.

## Description

### CROSS-REFERENCE TO RELATED APPLICATION

This application claims priority from United States Patent Application No. 18/600,996 filed on March 11, 2024.

### FIELD

The present disclosure generally relates to systems and methods for configuring devices of safety instrumented systems for use in an industrial plant.

### BACKGROUND

Safety instrumented systems (SIS) are used within industrial plants to mitigate and prevent safety hazards. SIS generally include numerous hardware and software components configured for monitoring safety states of plants and taking action when abnormalities are detected. For example, safety instrumented systems are configured to protect industrial plants from accidents by implementing safety functions through safety programmable logic controllers (PLCs) within the plants.

Conventional processes for programming SIS devices for effective use within industrial plants, are both time and resource-intensive. For example, conventional programming processes generally include a large team of programmers and engineers working together to (i) define parameters for control programs to be executed by the SIS devices and (ii) develop and customize the control programs. These processes typically take several months to execute. Furthermore, these processes are required anytime a change in an industrial plant requires edits to be made to a control program of a SIS device.

Therefore, there is a need for optimizing the programming of SIS devices within an industrial plant.

### SUMMARY

Aspects of the present disclosure permit an improved framework for programming safety devices of a safety instrumented system within an industrial plant.

In one aspect, a system for configuring a safety programmable logic controller (PLC) for use in a safety-instrumented system in an industrial plant comprises a memory device configured to store at least programming instructions. A configurator processor is in communication with the memory device. The configurator processor, upon execution of the programming instructions, is configured to receive a set of safety instructions defining one or more relationships between one or more inputs and outputs of the industrial plant, populate an artificial neural network based at least on the set of safety instructions, train the artificial neural network to configure at least one of one or more weights and one or more biasing nodes for the artificial neural network, such that the artificial neural network is configured to replicate the one or more relationships defined by the set of safety instructions, and provide a safety control program based on the configured artificial neural network to a plant operator for configuring the safety PLC. The safety control program is configured for execution by the safety PLC.

In another aspect, a computer-implemented method for developing a safety control program for configuring one or more devices in a safety-instrumented system in an industrial plant comprises receiving a set of safety instructions defining one or more relationships between one or more inputs and outputs of the industrial plant. An artificial neural network is populated with the set of safety instructions. The artificial neural network is trained to configure at least one of one or more weights of the artificial neural network and one or more biasing nodes of the artificial neural network such that the artificial neural network is configured to replicate the one or more relationships defined by the set of safety instructions. A safety control program is provided to a plant operator. The safety control program comprises at least one of the weights and biasing nodes used to replicate the one or more relationships defined by the set of safety instructions. A safety control program is provided based on the configured artificial neural network to a plant operator.

In yet another aspect, a computer-implemented method for configuring a safety PLC for use in a safety-instrumented system in an industrial plant comprises receiving a set of maintenance instructions defining one or more relationships between one or more maintenance inputs and outputs for the industrial plant. An artificial neural network is populated with the set of maintenance instructions. The artificial neural network is trained to configure at least one of one or more weights and one or more biasing nodes for the artificial neural network such that the artificial network is configured to replicate the one or more relationships defined by the set of maintenance instructions. A safety control program is provided and configured for execution by the safety PLC, based on the configured artificial neural network.

Other objects and features will be in part apparent and in part pointed out hereinafter.

### BRIEF DESCRIPTION OF THE DRAWINGS

FIG. 1 is a block diagram of a system for configuring a safety-instrumented system device according to an embodiment.
FIG. 2 is an illustration of a cause and effect matrix according to an embodiment.
FIG. 3 is an illustration of an artificial neural network according to an embodiment.
FIG. 4 is a schematic block diagram of a safety control program according to an embodiment.
FIG. 5 is a block diagram of the safety control program of FIG. 4 according to an embodiment.

Corresponding reference characters indicate corresponding parts throughout the drawings.

### DETAILED DESCRIPTION

Safety instrumented systems (SIS) are used to prevent industrial and safety accidents in industrial plants such as oil refineries, chemical plants, etc. SIS comprise numerous hardware and software devices that are programmed to implement safety functions for protecting industrial plants. For example, at the heart of a SIS, generally resides a safety programmable logic controller (PLC) that monitors safety states of the industrial plant and takes action when abnormal safety conditions are detected. Conventional processes for initial programming of the SIS hardware and software devices, are time and resource-intensive. Furthermore, depending on the device type, the editing of the control programs of the devices, when a change is required in the industrial plant, can be very challenging. For example, configurable safety PLCs include a pre-installed fixed programming, and are typically easier to use and manage but have limited flexibility and customization. On the contrary, a programmable safety PLC offers flexibility but requires the development of custom code. As will be explained in greater detail below, systems and methods in accordance with the present disclosure permit an easy, flexible and customizable automatic configuration of SIS devices.

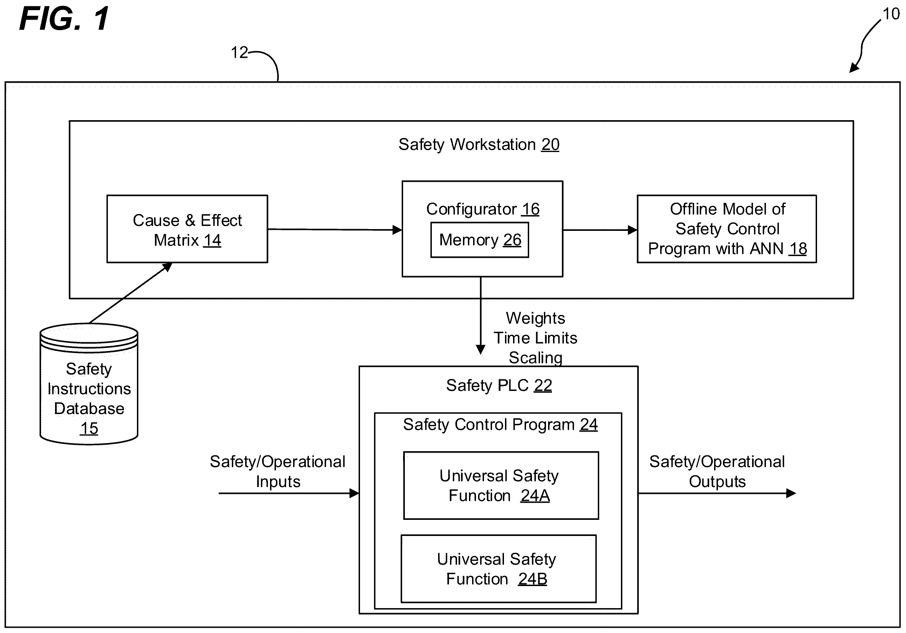

Referring now to FIG. 1, an exemplary embodiment of a system for configuring a device for use in a safety-instrumented system in an industrial plant is generally indicated at reference number 10. Broadly the system 10 includes a safety workstation 20 configured to receive a set of safety instructions 14 at a configurator processor 16. In the embodiment of FIG. 1, the safety instructions 14 define one or more relationships between one or more inputs and outputs of an industrial plant 12. Moreover, the configurator processor 16, upon execution of programming instructions stored within a memory 26 of the safety workstation 20, is configured to populate an artificial neural network (ANN) 18 based on the safety instructions to configure the ANN to replicate the relationships defined by the safety instructions. The configurator processor 16 utilizes the configured ANN 18 (implemented as a universal safety function) to develop a safety control program 24 for configuring a safety PLC 22. Although illustrated as internal to configurator processor 16, it is to be understood that the memory 26 may be internal to or external to configurator processor 16 and may be internal to or external to safety workstation 20.

The individual components of the system 10 will now be described in greater detail before turning to exemplary methods of using the system to configure SIS devices.

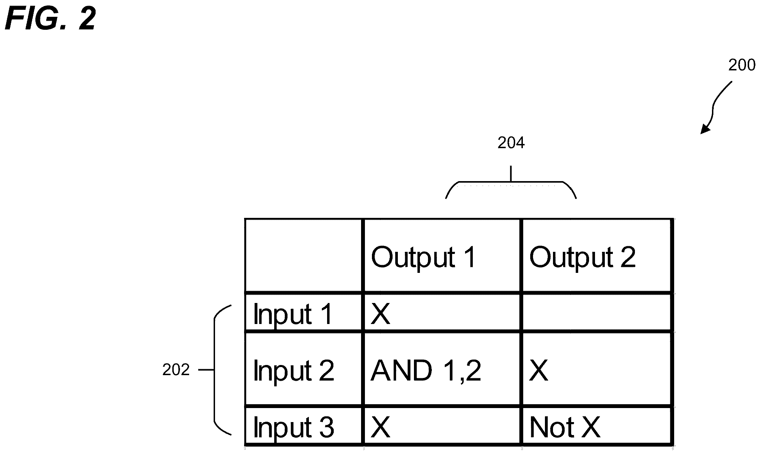

Monitoring devices of the SIS are configured to monitor safety and operational inputs and outputs of the industrial plant 12. Safety instructions 14 are used to define relationships between the inputs and outputs. In the example of FIG. 2, the safety instructions 14 comprise a cause and effect matrix (e.g., IEC 62881 Cause and Effect Matrix) for inputs and outputs of the industrial plant 12. In the illustrated embodiment, a table 200 is provided consisting of rows of inputs 202 and columns of outputs 204. The intersection shows the transformation of inputs to outputs. In a preferred embodiment, the transformation generally follows a standardized industrial automation programming language such as IEC 61131-3. In another example, the safety instructions 14 comprise a truth table for inputs and outputs of the industrial plant 12. Moreover, in an exemplary embodiment, the cause and effect matrix is converted to a truth table. In one embodiment, the inputs, outputs, and corresponding safety instructions 14 are stored in one or more databases such as a safety instructions database 15, however it will be apparent to one of ordinary skill in the art that other data storages may be used without departing from the scope of the present disclosure.

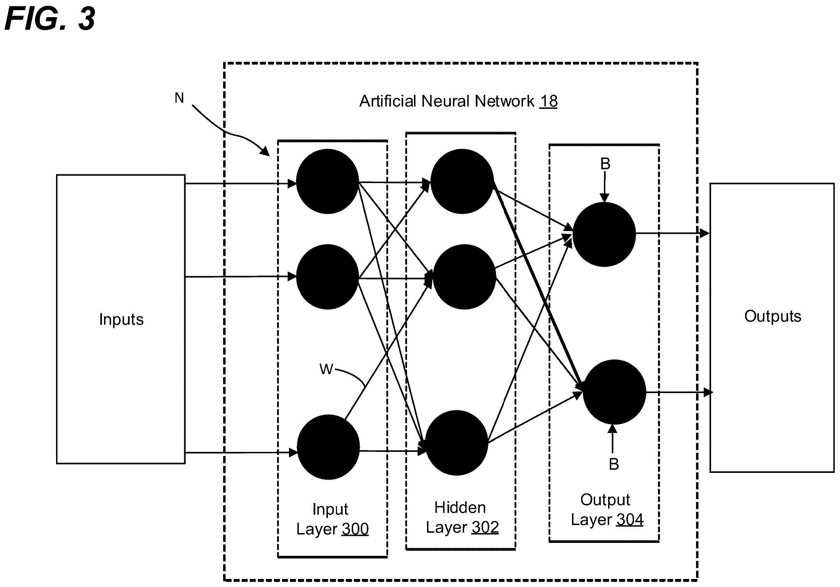

Referring now to FIG. 3, an exemplary embodiment of the artificial neural network 18 is shown. The artificial neural network 18 comprises a plurality of nodes N (also referred to as neurons) connected, or linked, via weights W among an input layer 300, one or more hidden layers 302, and an output layer 304. As is known in the art, the weights W determine one nodes influence on another node. The input layer 300 comprises the inputs represented as input layer nodes. The input layer nodes are combined with their respective weights W to arrive at the hidden layer 302 to create hidden layer nodes. The hidden layer nodes are combined with their respective weights to arrive at the output layer 304 to create output layer nodes comprising at least one of predictions and classifications. Given combined inputs and weights from a previous layer, activation functions are used to determine weights W, times, scaling and outputs. For example, a Sigmoid function may be used in the ANN 18 to calculate neuron output. The ANN 18 determines the weights W, by finding values that minimize error of the functions. Furthermore, biasing nodes B may be determined and implemented within the ANN 18 to bias or offset neuron output.

The safety PLC 22 of the SIS comprises at least one of a main processor module and I/O module. Furthermore, the safety PLC 22 is a diagnostic-type PLC that is configured to detect abnormalities in safety and operational inputs from the industrial plant 12, and in response, execute actions based on the safety control program 24 to mitigate and prevent unsafe operating conditions within the industrial plant. In one embodiment, the safety PLC 22 is configured to execute the safety control program 24 online. In one example, the safety PLC 22 comprises a Triconex^{™} SIS safety PLC from Schneider Electric.

The safety workstation 20 comprises the configurator processor 16, memory device 26 configured to store at least programming instructions for the configurator processor 16 to execute, user inputs, a display, and other related elements. The safety workstation 20 may also include circuit boards and/or other electronic components such as a transceiver or external connection for communicating with other computing devices of the industrial plant 12. For example, the safety workstation 20 includes components such as wireless transceivers and/or wired connectors that connect the safety workstation to the safety instructions database 15, the safety PLC 22, and other SIS devices. Although the safety workstation 20 is illustrated as being a local computing resource within the industrial plant 12, it will be understood that the safety workstation can comprise other types of computing resources such as remote computing resources that are external to the industrial plant. As will be described in further detail below, the safety workstation 20 implements the configurator processor 16 to execute processor-executable programming instructions obtained from the memory device 26 for developing the safety control program 24 for configuring the safety PLC 22.

The configurator processor 16 communicates with the memory device 26 to obtain programming instructions. Upon execution of the programming instructions, the configurator processor 16 is configured to receive the set of safety instructions 14 as an input from the safety instructions database 15, populate the artificial neural network 18 based at least on the set of safety instructions, train the artificial neural network to configure at least one of one or more weights and one or more biasing nodes for the artificial neural network to replicate the one or more relationships defined by the set of safety instructions, and provide the safety control program 24 to a plant operator (e.g., via the display of the safety workstation 20) for configuring the safety PLC 22. It is envisioned that the safety workstation 20 and particularly the configurator processor 16 is configured to operate offline to develop an off-line model of the safety control program 24. For example, training of the ANN 18 is performed offline on the safety workstation 20. Furthermore, it is envisioned that the training results (e.g., the safety control program comprising ANN weights, time limits, scaling) are downloaded to the safety PLC 22 online.

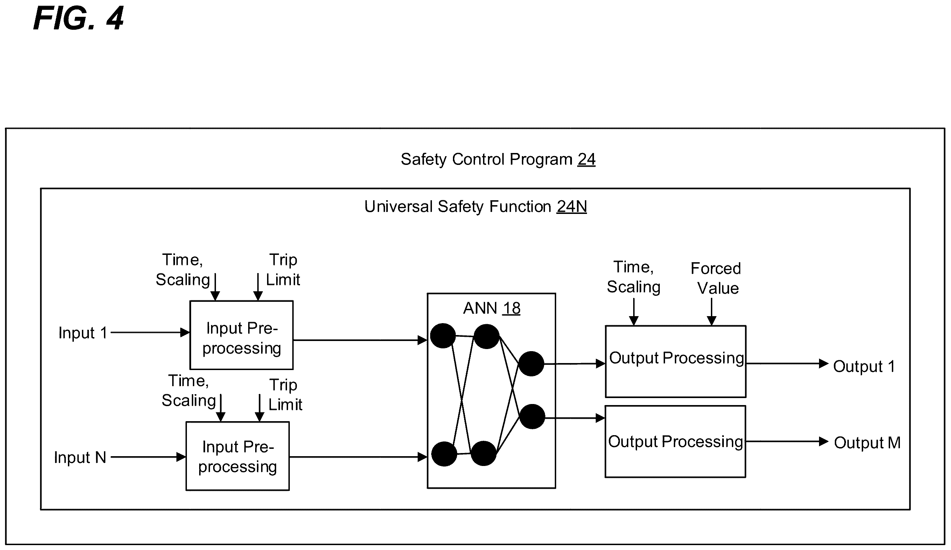

Referring now to FIG. 4, an exemplary embodiment of the safety control program 24 configured for execution by the safety PLC 22 is shown. The safety control program 24 defines a set of instructions for the safety PLC 22 to execute to mitigate and prevent safety hazards within the industrial plant 12. The safety control program 24 comprises instructions for input processing based on the configured ANN 18 and additionally may include at least one of input pre-processing and output processing. The input pre-processing instructions comprise instructions for converting and scaling one or more safety and operational inputs received at the safety PLC 22 to a processor-readable format. For example, the input pre-processing instructions are configured for converting and scaling discrete and analog safety and operational inputs such as times and trip limits to 0-1 inputs. Furthermore, the safety control program 24 utilizes the configured ANN 18 to define instructions for processing the 0-1 inputs of the Safety PLC 22 to determine one or more safety PLC outputs. The output processing instructions comprise instructions for converting and scaling the determined safety PLC outputs into an operator readable format. For example, the output processing instructions are configured for converting and scaling 0-1 safety PLC outputs to analog and/or digital outputs.

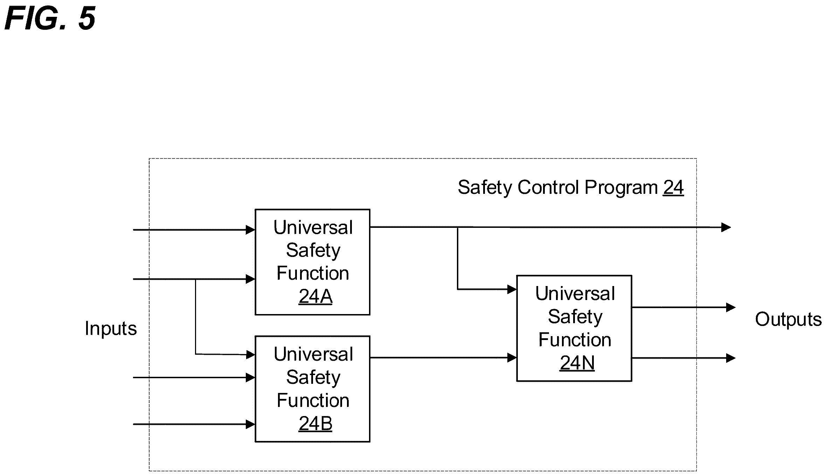

In a preferred embodiment, the safety control program 24 comprises one or more universal safety functions 24A-24N that are standard for the SIS in the industrial plant 12. For example, the configurator processor 16 is configured, upon execution of the programming instructions, to provide one or more universal safety functions 24A-24N to define the safety control program 24 that is used for programming a plurality of safety PLC's within the SIS. Referring now to FIG. 5 an exemplary embodiment of the safety control program 24 is shown comprising one or more universal safety functions 24A-24N. Moreover, the universal safety functions 24A-24N of the safety control program 24 are configured to at least one of standalone and be nested together.

An exemplary method of using the system 10 to develop the safety control program 24 for configuring one or more safety PLCs 22 in the SIS of the industrial plant 12 will now be described. The method is best understood as comprising training steps wherein the ANN 18 is trained and the safety control program 24 is developed, and implementation steps wherein the safety control program is downloaded onto and implemented by one or more safety PLCs 22 of the SIS. It is contemplated that the training steps are performed offline, and that the implementation steps are performed online, however it will be apparent to one of ordinary skill in the art that the training steps could be performed online and the implementation steps could be performed offline.

Prior to the training steps, the safety instructions 14, defining relationships between one or more safety and operational inputs and outputs of the plant 12, are determined. For example, a cause and effect matrix is created to define how and when actions are implemented in the SIS, and the cause and effect matrix is converted to a truth table. From here, the training steps are initiated by providing the safety instructions 14 as input to the safety workstation 20. For example, the configurator processor 16 obtains the safety instructions 14 from the safety instructions database 15. Next, the configurator processor 16 executes programming instructions obtained from the memory 26 of the safety workstation 20 to develop the safety control program 24 based on the safety instructions. Upon execution of the programming instructions, the configurator processor 16 populates the nodes N of the ANN 18 with the set of safety instructions. Furthermore, the configurator processor 16 trains the ANN 18 by way of one or more activation functions, to configure at least one of one or more weights W of the ANN and one or more biasing nodes B of the ANN such that the ANN is configured to replicate the one or more relationships defined by the set of safety instructions. In a preferred embodiment, the ANN 18 is further configured as one or more universal safety functions that may be used to program multiple devices within the SIS. From here, the safety control program 24 is developed based on the configured ANN 18 (including one or more universal safety functions). In exemplary embodiment, the safety control program 24 is further developed to include input pre-processing and output processing instructions. The configurator processor 16 provides the safety control program 24 for implementation.

In the implementation steps, the safety control program 24 is downloaded to one or more safety PLCs 22 to configure the safety PLCs for operation within the industrial plant 12. For example, a plant operator retrieves the safety control program 24 from the safety workstation 20, and downloads it onto one or more safety PLCs 22. Alternatively, the programming instructions may further comprise downloading instructions for the configurator processor 16 to execute to automatically download the safety control program 24 on the safety PLC 22. Once the safety control program 24 is successfully downloaded onto the safety PLC 22, the safety PLC executes the safety control program to mitigate and prevent safety hazards within the industrial plant 12.

In addition to or apart from the method above, additional steps for incorporating maintenance procedures into the safety control program 24 will now be described. In a first step, maintenance instructions are defined by one or more relationships between one or more maintenance inputs and outputs for the industrial plant 12. For example, the maintenance instructions are defined by one or more causes and effect matrices of one or more maintenance bypass procedures. Next, the configurator processor 16, upon execution of programming instructions, obtains the maintenance instructions from a data storage, populates the ANN 18 with the maintenance instructions, and trains the ANN to configure at least one of one or more weights and one or more biasing nodes for the ANN to replicate the one or more relationships defined by the set of maintenance instructions. Additionally, a functional behavior of the SIS is directly tested against the cause and effect matrix to confirm a correct behavior of the SIS.

In an exemplary embodiment, a method for enabling model-based SIS programming using an ANN, in accordance with the present disclosure comprises: providing a safety PLC with an ANN arranged to implement safety functions, and implementing the ANN as a universal safety function. Next, the universal safety function is trained to replicate relationships between inputs and outputs as represented by cause and effect matrices, and the universal safety function is configured by adjusting weights of the ANN. Furthermore, the determined weights are downloaded online to the safety PLC, and thereby executed by the safety PLC.

Several benefits of systems and methods in accordance with the present disclosure are realized. One benefit includes the ability to save time by directly converting cause and effects matrices to safety control programs for programming safety PLCs. Additionally, programming time of the safety PLCs is reduced, as the safety control programs may be pre-installed and reused. Programming time is further reduced as only ANN weights and biasing nodes are set in the safety PLC to achieve a desired behavior, as opposed to having to write custom programs. Testability of SIS is also improved, as testing coverage is increased and testing time is reduced by using pre-installed, pre-tested programming of safety PLCs. Furthermore, input/output behavior of safety PLCs can be tested directly against the cause and effect matrices. In general, systems and methods in accordance with the present disclosure achieve the flexibility of a programmable safety PLC with the ease of use of a configurable safety PLC, thereby permitting quick, efficient, custom, and user-friendly configuration of safety devices within a SIS in an industrial plant.

Embodiments of the present disclosure comprise a special purpose computer including a variety of computer hardware, as described in greater detail herein and are operational with other special purpose computing system environments or configurations even if described in connection with an example computing system environment. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the present disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices. For purposes of illustration, programs and other executable program components may be shown as discrete blocks. It is recognized, however, that such programs and components reside at various times in different storage components of a computing device, and are executed by a data processor(s) of the device.

In operation, processors, computers, and/or servers may execute the processor-executable instructions (e.g., software, firmware, and/or hardware) such as those illustrated herein to implement aspects of the invention. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the present disclosure.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

Having described the invention in detail, it will be apparent that modifications and variations are possible without departing from the scope of the invention defined in the appended claims.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products without departing from the scope of the invention, it is intended that all matter contained in the above description and shown in the accompanying drawings shall be interpreted as illustrative and not in a limiting sense.

Accordingly, the present invention may also be described as follows, optionally in combination with one or more of the above-mentioned features of the present invention: A system for programming a safety programmable learning controller (PLC) of a safety-instrumented system includes a safety workstation wherein a safety control program is developed for execution by the safety PLC. The safety workstation comprises a memory configured to store programming instructions and a configurator processor. Upon execution of the programming instructions, the configurator processor receives a set of safety instructions defining one or more relationships between inputs and outputs of an industrial plant, populates an artificial neural network (ANN) based on the safety instructions, trains the ANN to determine weights and biasing nodes for the ANN such that the ANN is configured to replicate the relationships defined by the safety instructions, and provides a safety control program based on the configured ANN. The safety control program is downloaded to the safety PLC so that upon execution, the safety PLC mitigates and prevents safety hazards within the industrial plant.

## Claims

1. A system for configuring a safety programmable logic controller (PLC) for use in a safety-instrumented system in an industrial plant, the system comprising:
a memory device configured to store at least programming instructions; and
a configurator processor in communication with the memory device, the configurator processor, upon execution of the programming instructions, is configured to:
receive a set of safety instructions defining one or more relationships between one or more inputs and outputs of the industrial plant;
populate an artificial neural network based at least on the set of safety instructions;
train the artificial neural network to configure at least one of one or more weights and one or more biasing nodes for the artificial neural network, such that the artificial neural network is configured to replicate the one or more relationships defined by the set of safety instructions; and
provide a safety control program based on the configured artificial neural network to a plant operator for configuring the safety PLC, and wherein the safety control program is configured for execution by the safety PLC.

2. The system as set forth in claim 1, further comprising a safety workstation comprising at least one of the memory device and the configurator processor, the safety workstation being configured to operate offline.

3. The system as set forth in claim 2, wherein the safety workstation is independent from the safety PLC, and wherein the safety PLC is configured to operate online.

4. The system as set forth in any one of claims 1-3, wherein the set of safety instructions comprises a cause and effect matrix for inputs and outputs of the industrial plant, and a truth table for inputs and outputs of the industrial plant.

5. The system as set forth in any one of claims 1-4, wherein the safety control program comprises a universal safety function that is standard for the safety-instrumented system in the industrial plant.

6. The system as set forth in claim 5, wherein the configurator processor is configured to provide a plurality of universal safety functions for configuring the safety PLC.

7. The system as set forth in any one of claims 1-6, wherein the safety control program defines a set of instructions for the safety PLC to execute to mitigate and prevent safety hazards within the industrial plant.

8. A computer-implemented method for developing a safety control program for configuring one or more devices in a safety-instrumented system in an industrial plant, the method comprising:
receiving a set of safety instructions defining one or more relationships between one or more inputs and outputs of the industrial plant;
populating an artificial neural network with the set of safety instructions;
training the artificial neural network to configure at least one of one or more weights of the artificial neural network and one or more biasing nodes of the artificial neural network such that the artificial neural network is configured to replicate the one or more relationships defined by the set of safety instructions; and
providing a safety control program based on the configured artificial neural network, to a plant operator.

9. The method as set forth in claim 8, further comprising downloading the safety control program to a safety PLC of the safety-instrumented system to configure the safety PLC, and the safety PLC executing the safety control program to mitigate and prevent safety hazards within the industrial plant.

10. The method as set forth in claim 9, wherein downloading the safety control program to the safety PLC is executed online.

11. The method as set forth in any one of claims 8-10, further comprising defining the set of safety instructions with a cause and effect matrix, and converting the cause and effect matrix to a truth table.

12. The method as set forth in any one of claims 8-11, wherein training the artificial neural network is executed offline.

13. The method as set forth in any one of claims 8-12, further comprising defining input pre-processing instructions for the device, such that an input received by the device is converted into a processor-readable format, and defining output processing instructions for the device, such that an output from the safety control program is converted into an operator-readable format.

14. The method as set forth in any one of claims 8-13, further comprising:
receiving a set of maintenance instructions defining one or more relationships between one or more maintenance inputs and the outputs for the industrial plant;
populating the artificial neural network with the set of maintenance instructions;
training the artificial neural network to configure at least one of the one or more weights and the one or more biasing nodes for the artificial neural network such that the artificial neural network is configured to replicate the one or more relationships defined by the set of maintenance instructions;
providing the safety control program configured for execution by the safety PLC, based on the configured artificial neural network.

15. The method as set forth in claim 14, further comprising testing a functional behavior of the SIS directly against the maintenance instructions comprising one or more cause and effect matrices to confirm correct behavior of the SIS.
